# EUROPEAN PATENT APPLICATION

(11) **EP 4 177 138 A1**
(43) Date of publication of application: **10.05.2023**
(21) Application number: 22192696.7
(22) Date of filing: 29.08.2022
(51) Int. Cl.: B62D 25/04, B62D 25/06, B62D 27/02

(54) **VEHICLE BODY REAR STRUCTURE**

(30) Priority: 09.11.2021 JP 2021182579
(71) Applicant: Suzuki Motor Corporation, Hamamatsu-shi, Shizuoka 432-8611 (JP)
(72) Inventor: MOCHIZUKI, Shinei, HAMAMATSU-SHI, SHIZUOKA, 4328611 (JP); TSUJIMOTO, Masayuki, HAMAMATSU-SHI, SHIZUOKA, 4328611 (JP)
(74) Representative: Plasseraud IP

(57) **Abstract**

[Problem to be Solved]

The present invention provides a vehicle body rear structure that can enhance rigidity of an upside corner portion of a backdoor opening portion and improve torsional rigidity of the entire vehicle body.

[Solution]

The vehicle body rear structure has a cylindrical reinforcing structure portion 20 extending in a vehicle width direction, at an upside corner portion of a backdoor opening portion 6 that is arranged adjacent to a rear end portion of a roof rail groove 3. The reinforcing structure portion 20 has a quadrangular shape when viewed from the side of the vehicle, and includes an upper surface portion 21 and a rear wall portion 22 formed by a side body outer extension panel 10, and a bottom surface portion 23 and a front wall portion 24 formed by a quarter inner upper extension panel 12; and each of the rear wall portion 22 and the front wall portion 24 extends linearly from the upside portion to the downside portion.

## Description

### [Technical Field]

The present invention relates to a vehicle body rear structure.

### [Background Art]

In general, in a vehicle such as an automobile, a hatchback vehicle is known that is a type having a door hinge on a rear upside of a vehicle body and a backdoor which opens toward an upper side. A backdoor opening portion of a hatchback vehicle is designed so as to have a large area at a vehicle body rear portion, in order to enhance loading capacity or improve the ease of loading and unloading cargo. On the other hand, when the backdoor opening portion is formed to have a large area, the rigidity of the entire vehicle decreases, and accordingly, it becomes necessary to increase rigidity around the backdoor opening portion.

Some conventional hatchback vehicles have a structure in which the backdoor opening portion is reinforced by enhancing the joining rigidity of a panel constituting an upside corner portion of the backdoor opening portion. For example, in Patent Literature 1, a reinforcing structure is disclosed in which a closed cross section is formed when viewed from the side of the vehicle, by members such as a side body outer panel and a quarter inner panel, at a shoulder portion of the backdoor opening (upside corner portion of backdoor opening portion) located behind a roof rail groove provided on a roof panel (see Figures 2, 6, and the like of Patent Literature 1).

### [Citation List]

### [Patent Literature]

[Patent Literature 1] JP 2012-228948 A

### [Summary of Invention]

### [Problems to be Solved by the Invention]

In the hatchback vehicle as described above, the roof panel and the side body outer panel are spotwelded at multiple points at a lower portion of the roof rail groove, and when twisting or the like has occurred in the vehicle body due to a load during running, bending deformation tends to easily occur in the entire roof starting from the spotwelded portion of the roof rail groove. The upside corner portion of the backdoor opening portion is arranged adjacent to a rear end portion of such a roof rail groove, and accordingly is a portion which tends to be particularly easily deformed in the backdoor opening portion. The rigidity of the backdoor opening portion affects the rigidity of the vehicle body rear portion, and accordingly contributes to a torsional rigidity of the overall vehicle body and also contributes to improvement in the quality and steering stability of the vehicle. For this reason, it is necessary to secure rigidity of the upside corner portions of the backdoor opening portion.

However, for the conventional reinforcing structure described above, in the closed cross section formed on the shoulder portion of the backdoor opening (Figure 6 of Patent Literature 1), a bent portion for providing a hinge on the upside of the backdoor opening portion is formed on a panel surface which is located on a vehicle rear side and extends in the vertical direction of the vehicle. In the closed cross section having such a bent portion, when a load in the vertical direction of the vehicle is applied to the reinforcing structure, there is a possibility that the panel surface is bent starting from the bent portion, and there has been room for improvement in securing rigidity of the upside corner portion of the backdoor opening portion.

The present invention has been made by paying attention to the above points, and an object of the present invention is to provide a vehicle body rear structure that can enhance the rigidity of the upside corner portion of the backdoor opening portion and improve the torsional rigidity of the entire vehicle body.

### [Means for Solving the Problems]

In order to achieve the above object, one aspect of the present invention is to provide a vehicle body rear structure including a roof rail groove extending along a front-rear direction of a vehicle at a joint portion between a roof panel and a side body outer panel; and an upside corner portion of a backdoor opening portion that is opened and closed by a backdoor is arranged adjacent to a rear end portion of the roof rail groove, the upside corner portion of the backdoor opening portion having a cylindrical reinforcing structure portion extending in a vehicle width direction, the reinforcing structure portion being formed by an upside rear portion of the side body outer panel, and by an upper portion of a quarter inner panel that is arranged in a vehicle inside of a rear portion of the side body outer panel. The reinforcing structure portion in this vehicle body rear structure has a quadrangular shape when viewed from a side of the vehicle, and includes an upper surface portion and a rear wall portion that are formed by the upside rear portion of the side body outer panel, and a bottom surface portion and a front wall portion that are formed by the upper portion of the quarter inner panel; and each of the rear wall portion and the front wall portion extends linearly from an upside portion to a downside portion.

### [Advantageous Effects of Invention]

According to the vehicle body rear structure according to the present invention, the closed cross section having the quadrangular shape when viewed from the side of the vehicle is formed by the cylindrical reinforcing structure portion which is provided at the upside corner portion of the backdoor opening portion, and each of the rear wall portion and the front wall portion of the reinforcing structure portion extends linearly from the upside portion to the downside portion, which can thereby prevent the rear wall portion or the front wall portion from being bent by twisting of the vehicle body during running or the load in the vertical direction of the vehicle caused by the opening/closing of the backdoor or the like. As a result, the rigidity of the upside corner portion of the backdoor opening portion can be enhanced, and the torsional rigidity of the entire vehicle body, the quality of the vehicle, and the steering stability can be improved.

### [Brief Description of Drawings]

[Figure 1] Figure 1 is a perspective view of a vehicle body to which a vehicle body rear structure according to one embodiment of the present invention is applied, when viewed obliquely from the rear.
[Figure 2] Figure 2 is an exploded perspective view schematically showing a rear portion on a right side of the vehicle body of Figure 1, in a state of being disassembled.
[Figure 3] Figure 3 is an enlarged perspective view showing the part X of Figure 1.
[Figure 4] Figure 4 is an enlarged perspective view showing a state in which a roof panel is attached to Figure 3.
[Figure 5] Figure 5 is an enlarged perspective view showing a state in which a backdoor hinge stiffener is removed from Figure 3.
[Figure 6] Figure 6 is a cross-sectional perspective view taken along the line A-A of Figure 4.
[Figure 7] Figure 7 is an enlarged cross-sectional view of the periphery of a reinforcing structure portion of Figure 6, when viewed from the inside in the vehicle width direction.
[Figure 8] Figure 8 is a rear view of the vehicle body of Figure 1, when viewed from the rear of the vehicle.
[Figure 9] Figure 9 is an enlarged perspective view showing a state in which a backdoor hinge is attached to Figure 4.
[Figure 10] Figure 10 is a cross-sectional view taken along the line B-B of Figure 9.

### [Mode for Carrying Out the Invention]

An embodiment of the present invention will be described below in detail with reference to the accompanying drawings.

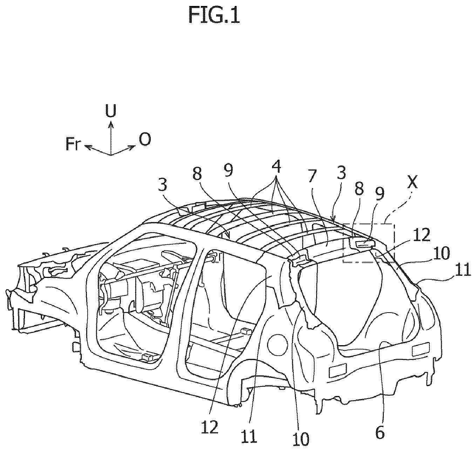

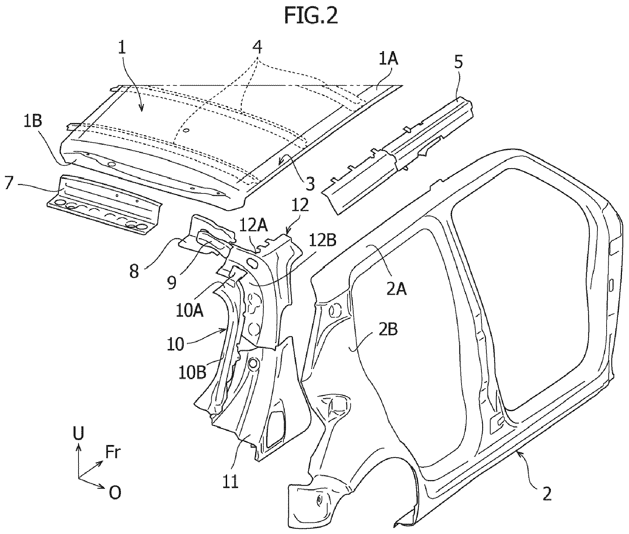

Figure 1 is a perspective view of a vehicle body to which a vehicle body rear structure according to one embodiment of the present invention is applied, when viewed obliquely from the rear. In addition, Figure 2 is an exploded perspective view schematically showing a rear portion on a right side of the vehicle body of Figure 1, in a state of being disassembled. Note that in each Figure, which will be described below, the direction of the arrow Fr indicates a front in a front-rear direction of the vehicle, the direction of the arrow O indicates an outside in a vehicle width direction, and the direction of the arrow U indicates an upper side in a vertical direction of the vehicle. In addition, "left and right" in the description of the embodiment corresponds to the left and right when a vehicle front is viewed from the vehicle interior.

In Figures 1 and 2, the vehicle to which the vehicle body rear structure of the present embodiment is applied is a hatchback vehicle that is a type of having a door hinge (not shown) on the rear upside of the vehicle body and a backdoor which opens toward an upper side. A roof panel 1 extending in the front-rear direction of the vehicle and the vehicle width direction is provided on an upper portion of the vehicle body of the hatchback vehicle. The upper portions of the left and right-side body outer panels 2 constituting the vehicle body side portions are joined respectively to both ends of the roof panel 1 in the vehicle width direction. Note that Figure 1 shows a state in which the roof panel 1 and the side body outer panels 2 are removed.

A roof rail groove 3 extending along the front-rear direction of the vehicle is provided at a joint portion between the roof panel 1 and the side body outer panel 2. The roof rail groove 3 can be used as a groove for spotwelding. Specifically, the roof rail groove 3 is formed so that the cross section is approximately U-shaped, by overlapping an end portion 1A in the vehicle width direction of the roof panel 1, which is bent so that the cross section is approximately L-shaped, with an end portion 2A in a vehicle inside of the side body outer panel 2, which is bent so that the cross section is approximately L-shaped, and joining the end portions by spotwelding. In such a roof rail groove 3, a plurality of ridge lines extending along the front-rear direction of the vehicle are formed.

In between the left and right roof rail grooves 3, a plurality of roof cross members 4 are arranged at intervals in the front-rear direction of the vehicle. As for each of the plurality of roof cross members 4, an inside surface of the roof panel 1 is joined to each of the roof cross members 4. In addition, a roof side rail 5 extending in the front-rear direction of the vehicle is joined to a lower surface of the roof rail groove 3. By the plurality of roof cross members 4 and roof side rails 5, the strength and rigidity of the entire roof is enhanced.

As shown in Figure 2, a rear end portion 1B of the roof panel 1 is bent toward the downside of the vehicle. At the vehicle body rear portion, a backdoor opening portion 6 that is opened and closed by the backdoor is provided (Figure 1), and the rear end portion 1B of the roof panel 1 forms an upside peripheral edge of the backdoor opening portion 6. In the vehicle inside of the rear end portion 1B of the roof panel 1, a roof back inner reinforcement 7, a pair of left and right backdoor hinge reinforcements 8, and a pair of left and right backdoor hinge stiffeners 9 are provided.

The roof back inner reinforcement 7 extends in the vehicle width direction and is formed so that the cross section is approximately L-shaped. An upper end portion and a rear end portion (both end portions of the L-shape) of the roof back inner reinforcement 7 are joined to an inside surface of the roof panel 1.

The backdoor hinge reinforcement 8 is joined to the end portion of the roof back inner reinforcement 7 in the vehicle width direction, and extends from the joint portion toward the outside in the vehicle width direction. The inside portion of the backdoor hinge reinforcement 8 in the vehicle width direction is formed so that the cross section becomes approximately L-shaped, so as to be continuous with the roof back inner reinforcement 7. At an outside end portion 8A in the vehicle width direction of the backdoor hinge reinforcement 8, a partition wall portion 25 is formed that constitutes one part of a reinforcing structure portion 20, which will be described later.

The backdoor hinge stiffener 9 is arranged on a vehicle outside (vehicle rear side) of the backdoor hinge reinforcement 8. The inside portion of the backdoor hinge stiffener 9 in the vehicle width direction is joined to the backdoor hinge reinforcement 8. An outside portion of the backdoor hinge stiffener 9 in the vehicle width direction is joined to a side body outer extension panel 10, which will be described later. The backdoor hinge stiffener 9 continuously connects the backdoor hinge reinforcement 8 and the side body outer extension panel 10 with a smooth curved surface.

At a rear portion of the side body outer panel 2, a quarter pillar portion 2B extending in the vertical direction of the vehicle is arranged. On an upper portion of a rear end of the quarter pillar portion 2B, the previously described side body outer extension panel 10 is provided.

The side body outer extension panel 10 extends from the upper portion of the rear end of the quarter pillar portion 2B in the side body outer panel 2, to the vehicle rear side. The side body outer extension panel 10 extends substantially in the vertical direction of the vehicle along the upper portion of the rear end of the quarter pillar portion 2B, and has an inclined shape in which the upside portion is located on the vehicle front side with respect to the downside portion. An upper end portion 10A of the side body outer extension panel 10 is curved toward the inside in the vehicle width direction. The tip of the upper end portion 10A (inside end in vehicle width direction) is located in the inner side in the vehicle width direction than the end portion 2A in the vehicle inside of the side body outer panel 2 which forms the roof rail groove 3, when viewed from the rear side of the vehicle. In other words, the curved upper end portion 10A of the side body outer extension panel 10 extends more toward the inner side in the vehicle width direction than the position of the roof rail groove 3, when viewed from the rear side of the vehicle. A rear end portion 10B of the side body outer extension panel 10 is bent toward the vehicle inside.

In the present embodiment, the side body outer panel 2 and the side body outer extension panel 10 correspond to the "side body outer panel" of the present invention, and the side body outer extension panel 10 constitutes the "upside rear portion of the side body outer panel" of the present invention.

In a vehicle inside of the quarter pillar portion 2B in the side body outer panel 2, a quarter inner upper panel 11 and a quarter inner upper extension panel 12 are provided.

The quarter inner upper panel 11 extends in the vertical direction of the vehicle along the quarter pillar portion 2B. A rear end portion of the quarter inner upper panel 11 is bent toward the inside in the vehicle width direction. To the vehicle outside at the rear end portion of the quarter inner upper panel 11, a downside portion of the side body outer extension panel 10 is joined.

The quarter inner upper extension panel 12 extends upward from the upper end portion of the quarter inner upper panel 11 to the vehicle upper side. An upper end portion 12A of the quarter inner upper extension panel 12 is curved toward the inside in the vehicle width direction and extends in the front-rear direction of the vehicle. A rear end portion 12B of the quarter inner upper extension panel 12 is bent toward the vehicle inside. To the vehicle outside of the rear end portion 12B of the quarter inner upper extension panel 12, an upside portion of the side body outer extension panel 10 is joined.

In the present embodiment, the quarter inner upper panel 11 and the quarter inner upper extension panel 12 correspond to the "quarter inner panel" of the present invention, and the quarter inner upper extension panel 12 constitutes the "upper portion of the quarter inner panel" of the present invention.

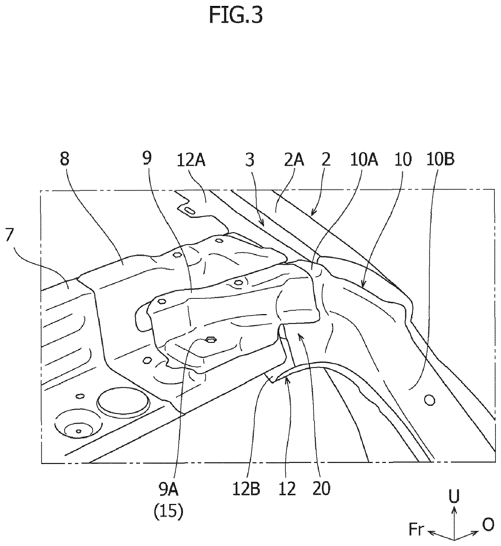

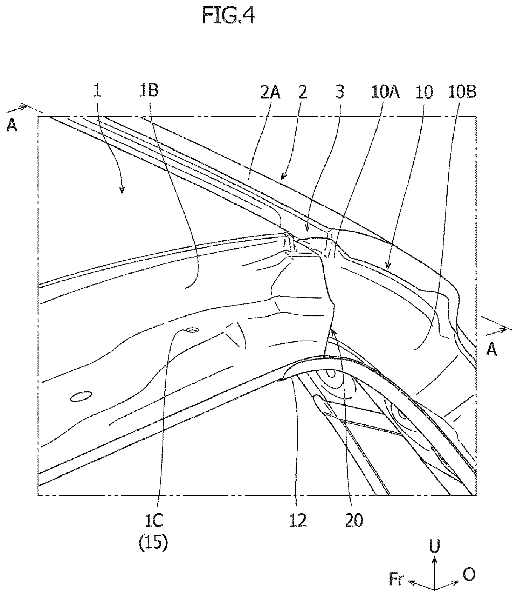

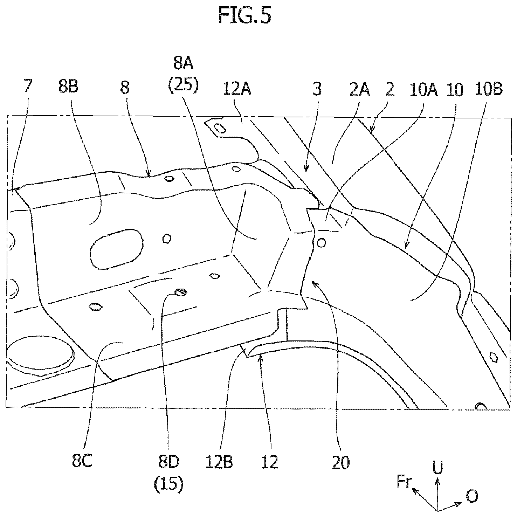

In the vehicle body rear structure of the present embodiment, the upside corner portion of the backdoor opening portion 6 is arranged adjacent to the rear end portion of the roof rail groove 3. The part X surrounded by a long-dash short-dash line in Figure 1 indicates a right upside corner portion of the backdoor opening portion 6. Figure 3 is an enlarged perspective view showing the part X of Figure 1. In addition, Figure 4 is an enlarged perspective view showing a state in which the roof panel 1 is attached to Figure 3. Furthermore, Figure 5 shows an enlarged perspective view showing a state in which the backdoor hinge stiffener 9 is removed from Figure 3.

As shown in Figures 3 to 5, the vehicle body rear structure of the present embodiment has a cylindrical reinforcing structure portion 20 which extends in the vehicle width direction, at the upside corner portion of the backdoor opening portion 6. This reinforcing structure portion 20 is formed by the side body outer extension panel 10 and the quarter inner upper extension panel 12. Specifically, to the vehicle inside surface of the upper end portion 10A of the side body outer extension panel 10, a vehicle outside surface of the rear end portion 12B of the quarter inner upper extension panel 12 is joined, and thereby, the cylindrical reinforcing structure portion 20 is formed which extends in the vehicle width direction.

The reinforcing structure portion 20 according to the present embodiment will be described below in detail.

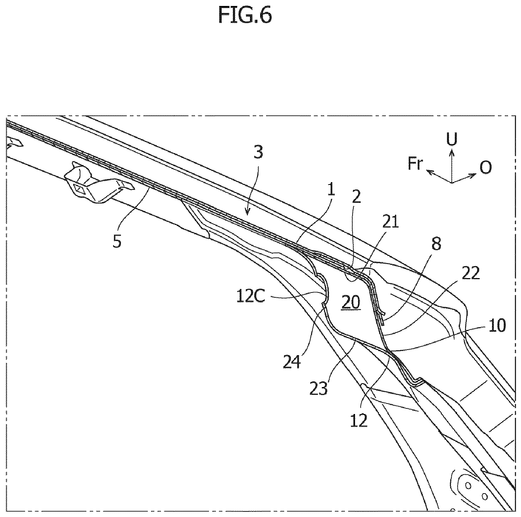

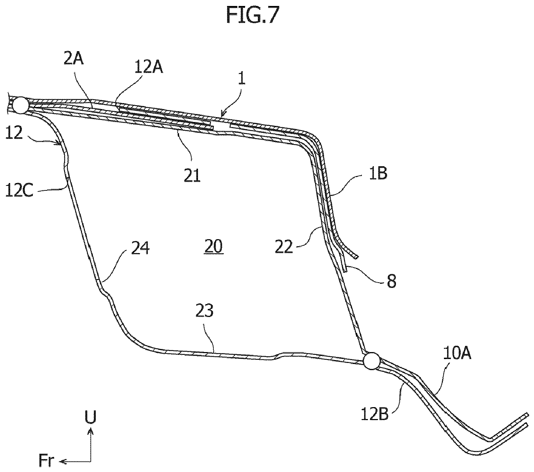

Figure 6 is a cross-sectional perspective view taken along the line A-A of Figure 4. In addition, Figure 7 is an enlarged cross-sectional view of the periphery of the reinforcing structure portion 20 in Figure 6, when viewed from the inside in the vehicle width direction.

As shown in Figures 6 and 7, the reinforcing structure portion 20 according to the present embodiment has a quadrangular shape when viewed from the side of the vehicle, and includes an upper surface portion 21 and a rear wall portion 22 formed by the side body outer extension panel 10, and a bottom surface portion 23 and a front wall portion 24 formed by the quarter inner upper extension panel 12.

Specifically, the upper surface portion 21 and the rear wall portion 22 of the reinforcing structure portion 20 are formed by bending the upper end portion 10A of the side body outer extension panel 10 into an approximately L-shape. When the vehicle is viewed from the side (Figure 7), the upper surface portion 21 extends in the front-rear direction, and the rear wall portion 22 extends downward of the vehicle toward the rear of the vehicle. The rear wall portion 22 is formed so as to extend linearly from the upside portion to the downside portion. In other words, the rear wall portion 22 has a flat plate-like shape having no bending portion except for both end portions in the vertical direction of the vehicle. In addition, in the present embodiment, the upper surface portion 21 is also formed so as to extend linearly from the front side portion to the rear side portion. However, the upper surface portion 21 may be formed so that the middle portion in the front-rear direction of the vehicle is bent or curved.

The bottom surface portion 23 and the front wall portion 24 of the reinforcing structure portion 20 are formed by bending the rear end portion 12B of the quarter inner upper extension panel 12 into an approximately L-shape. When the vehicle is viewed from the side (Figure 7), the bottom surface portion 23 extends in the front-rear direction, and the front wall portion 24 extends upward of the vehicle toward the front of the vehicle. The front wall portion 24 is formed so as to extend linearly from the upside portion to the downside portion, similarly to the previously described rear wall portion 22. In other words, the front wall portion 24 has a flat plate-like shape having no bending portion except for both end portions in the vertical direction of the vehicle. A work hole 12C for spotwelding is provided at a middle portion in the vertical direction of the vehicle in the front wall portion 24 (Figure 6). In addition, in the present embodiment, the bottom surface portion 23 is also formed so as to extend linearly from the front side portion to the rear side portion, similarly to the previously described upper surface portion 21. However, the bottom surface portion 23 may be formed so that the middle portion in the front-rear direction of the vehicle is bent or curved.

In the reinforcing structure portion 20 according to the present embodiment, the rear wall portion 22 and the front wall portion 24 are arranged approximately in parallel, and the upper surface portion 21 and the bottom surface portion 23 are arranged approximately in parallel. In other words, the reinforcing structure portion 20 according to the present embodiment has a substantially parallelogram shape when viewed from the side of the vehicle. The lower end portion of the rear wall portion 22 and the rear end portion of the bottom surface portion 23 are spotwelded in such a form that the two sheets overlap. In addition, the front end portion of the upper surface portion 21 and the upper end portion of the front wall portion 24 are spotwelded in such a form that four sheets further including the roof panel 1 and the side body outer panel 2 overlap. An end portion of the outside in the vehicle width direction of the reinforcing structure portion 20 is closed by the quarter pillar portion 2B of the side body outer panel 2 and the upper side surface of the side body outer extension panel 10. The reinforcing structure portion 20 which has a bottomed cylindrical shape extending in the vehicle width direction forms a closed cross section when viewed from the side of the vehicle.

The previously described partition wall portion 25 is provided at the inside end in the vehicle width direction of the reinforcing structure portion 20 (Figure 5). The partition wall portion 25 extends from the inside end in the vehicle width direction of the upper surface portion 21 and the rear wall portion 22 to the downside of the vehicle and the front side of the vehicle, and is connected to the bottom surface portion 23 and the front wall portion 24. In addition, the partition wall portion 25 has an inclined shape which inclines inward in the vehicle width direction toward the downside of the vehicle. In the present embodiment, the partition wall portion 25 is formed by the outside end portion 8A in the vehicle width direction of the backdoor hinge reinforcement 8. Specifically, in the backdoor hinge reinforcement 8 formed in an approximately L-shaped cross section, an approximately quadrangular inclined surface portion (outside end portion 8A in the vehicle width direction) is formed as the partition wall portion 25 of the reinforcing structure portion 20, and the approximately quadrangular inclined surface portion connects between the respective outer ends of a vertical wall portion 8B and a bottom wall portion 8C in the vehicle width direction, and faces the vehicle width direction. Thus, the partition wall portion 25 which is formed of a part of the backdoor hinge reinforcement 8 is covered with the backdoor hinge stiffener 9 when viewed from the rear of the vehicle (Figure 3).

Here, the inclined shape of the partition wall portion 25 as described above will be described in detail.

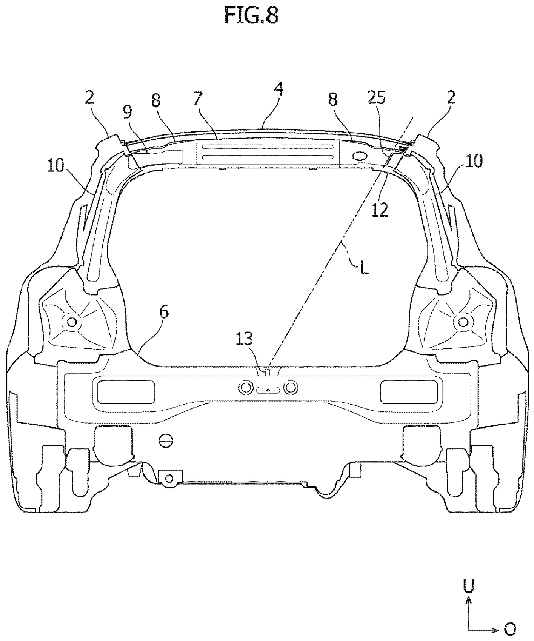

Figure 8 is a rear view of the vehicle body of Figure 1, when viewed from the rear of the vehicle. However, Figure 8 schematically shows a state in which the side body outer panel 2 is attached and the backdoor hinge stiffener 9 on the right side is removed. As shown in Figure 8, in the rear view of the vehicle, a backdoor striker 13 which is provided in a downside central portion of the backdoor opening portion 6 is arranged on an extended line L (long-dash short-dash line) of the inclined shape of the partition wall portion 25. The backdoor striker 13 is a hook or the like for keeping the backdoor in the locked state, by being engaged with a latch that exists in a door lock which is provided at the lower end portion of the backdoor (not shown). As described above, in the present embodiment, an inclination angle of the partition wall portion 25 is adjusted according to a relative positional relationship of the partition wall portion 25 of the reinforcing structure portion 20, with respect to the backdoor striker 13.

The backdoor hinge stiffener 9 that covers the partition wall portion 25 of the reinforcing structure portion 20 from the rear side of the vehicle as described above is provided with a hinge mounting portion 15 for attaching a backdoor hinge 14 that supports the backdoor so as to be openable and closable, as shown in Figure 3. At the hinge mounting portion 15 of the backdoor hinge stiffener 9, the rear end portion 1B of the roof panel 1 is overlapped thereon from the upper side of the vehicle (Figure 4), and is joined, and simultaneously, a middle part in the vehicle width direction in the bottom wall portion 8C of the backdoor hinge reinforcement 8 overlaps thereon from a downside of the vehicle (Figures 3 and 5), and is joined. In other words, in a lower place of the roof panel 1 including the hinge mounting portion 15, there are provided the backdoor hinge stiffener 9 and the backdoor hinge reinforcement 8 for reinforcing the hinge mounting portion 15.

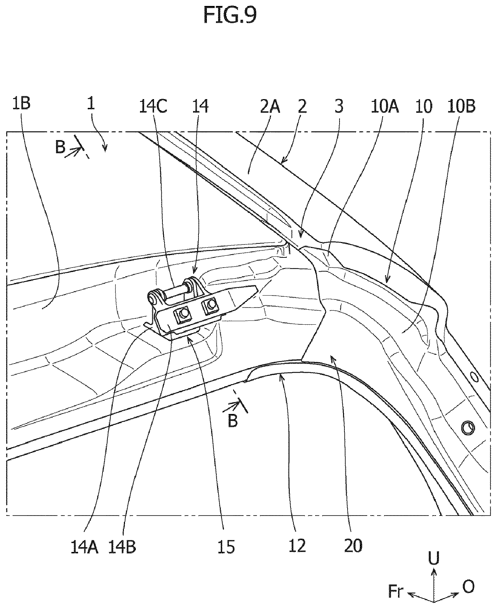

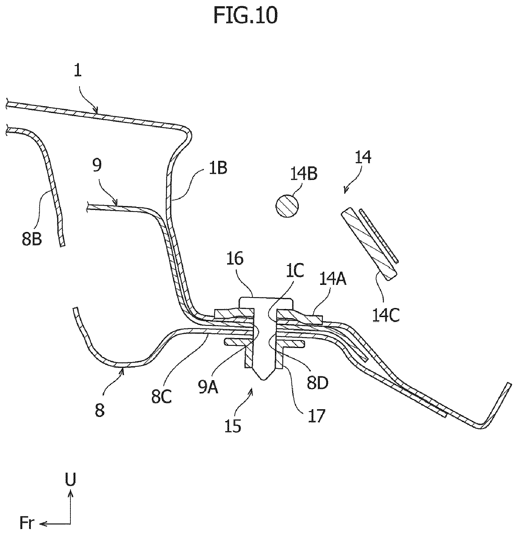

Figure 9 is an enlarged perspective view showing a state in which the backdoor hinge 14 is attached to the hinge mounting portion 15, in Figure 4. In addition, Figure 10 is a cross-sectional view taken along line B-B of Figure 9. As shown in Figures 9 and 10, the backdoor hinge 14 is fastened to the hinge mounting portion 15 with the use of a bolt or the like. The roof panel 1, the backdoor hinge stiffener 9 and the backdoor hinge reinforcement 8 are provided with bolt holes 1C, 9A and 8D into which the tightening bolt 16 is inserted, at respectively corresponding positions. To the lower surface of the backdoor hinge reinforcement 8, a welding nut 17 which is screwed with the tightening bolt 16 is fixed while corresponding to the position of the bolt hole 8D. The backdoor hinge 14 is structured so as to connect a hinge bracket 14A which is fixed to the hinge mounting portion 15 and a hinge arm 14B which is fixed to the backdoor side, so as to be rotatable in the vertical direction via a hinge pin 14C (rotation center axis).

Next, the action of the vehicle body rear structure according to the present embodiment will be described.

As described above, in a common type of hatchback vehicle, when the vehicle body is twisted due to a load during running, bending deformation tends to easily occur in the entire roof, starting from the spotwelded portion of the roof rail groove. Because of this, an upside corner portion of the backdoor opening portion, which is arranged adjacent to a rear end portion of the roof rail groove, is a portion which tends to be particularly easily deformed in the backdoor opening portion. Then, in the vehicle body rear structure according to the present embodiment, the cylindrical reinforcing structure portion 20 extending in the vehicle width direction is provided at the upside corner portion of the backdoor opening portion 6. The reinforcing structure portion 20 has a quadrangular shape when viewed from the side of the vehicle, and each of the rear wall portion 22 and the front wall portion 24 extends linearly from the upside portion to the downside portion.

According to the vehicle body rear structure having such a reinforcing structure portion 20, a quadrangular closed cross section is formed in the upside corner portion of the backdoor opening portion 6 when viewed from the side of the vehicle, and the rear wall portion 22 and the front wall portion 24 of the reinforcing structure portion 20 constituting the closed cross section form a flat plate-like shape having no bending portion, which can accordingly prevent the rear wall portion 22 or the front wall portion 24 from being bent due to the load in the vertical direction of the vehicle, which is caused by twisting of the vehicle body during running and opening and closing of the backdoor. In addition, in the present embodiment, in addition to the rear wall portion 22 and the front wall portion 24, the upper surface portion 21 and the bottom surface portion 23 also have a flat plate-like shape having no bending portion, which can accordingly prevent the upper surface portion 21 or the bottom surface portion 23 from being bent by a load in the front-rear direction of the vehicle. Thereby, the vehicle body rear structure of the present embodiment can enhance the rigidity of the upside corner portion of the backdoor opening portion 6, and can improve torsional rigidity of the entire vehicle body, the quality of the vehicle, and the steering stability.

In addition, in the vehicle body rear structure according to the present embodiment, the partition wall portion 25 is provided at the inside end in the vehicle width direction of the reinforcing structure portion 20, which can accordingly realize a structure that is stronger against a load acting on the reinforcing structure portion 20 in the vertical direction and the front-rear direction. Furthermore, the partition wall portion 25 has an inclined shape which inclines inward in the vehicle width direction toward the downside of the vehicle, and the backdoor striker 13 is arranged on the extension line L of the inclined shape. When the vehicle is running, a left-right movement centering on the backdoor striker 13 occurs in the backdoor. The inclination direction of the partition wall portion 25 faces the backdoor striker 13, which can thereby enhance a strength of the reinforcing structure portion 20, against a stress which is generated by such a left-right movement of the backdoor.

In addition, in the vehicle body rear structure according to this embodiment, the backdoor hinge stiffener 9 is provided which connects the side body outer extension panel 10 and the backdoor hinge reinforcement 8 with a curved surface, and the partition wall portion 25 of the reinforcing structure portion 20 is covered with the backdoor hinge stiffener 9, when viewed from the rear of the vehicle. The partition wall portion 25 (outside end portion 8A in vehicle width direction of backdoor hinge reinforcement 8) becomes a step with respect to the vertical wall portion 8B and the bottom wall portion 8C of the backdoor hinge reinforcement 8, and there is a possibility that the backdoor hinge reinforcement 8 is bent starting from the step. However, the backdoor hinge stiffener 9 straddles the partition wall portion 25 and connects the side body outer extension panel 10 and the backdoor hinge reinforcement 8, which can accordingly prevent the backdoor hinge reinforcement 8 from being bent. Thereby, the rigidity of the upside corner portion of the backdoor opening portion 6 can be further enhanced.

In addition, in the vehicle body rear structure according to the present embodiment, the hinge mounting portion 15 for attaching the backdoor hinge 14 is provided on the backdoor hinge stiffener 9, and the rear end portion 1B of the roof panel 1 and the middle part in the vehicle width direction of the backdoor hinge reinforcement 8 overlap and join at the hinge mounting portion 15. In this way, the backdoor hinge 14 is allowed to be attached to the hinge mounting portion 15 at which three sheets of the backdoor hinge stiffener 9, the roof panel 1, and the backdoor hinge reinforcement 8 overlap and thereby enhance the rigidity thereof, which can thereby further enhance the rigidity of the upside corner portion of the backdoor opening portion 6, and can also enhance support performance of the backdoor. Furthermore, the backdoor hinge 14 is arranged at an inner side in the vehicle width direction than the partition wall portion 25, when viewed from the rear of the vehicle, and the backdoor hinge 14 can be thereby installed on the backdoor hinge reinforcement 8, which avoids the reinforcing structure portion 20 having a depth in the front-rear direction. It is thereby possible to reduce a gap (space) between the vehicle body and backdoor when the backdoor is closed.

In the above, the embodiment of the present invention has been described, but the present invention is not limited to the above-described embodiment, and various modifications and changes can be made based on the technical concept of the present invention. For example, in the above-described embodiment, one example is shown in which the reinforcing structure portion 20 has a shape of a substantially parallelogram shape, when viewed from the side of the vehicle, but in addition to the parallelogram, the reinforcing structure portion 20 may have a quadrangular shape such as a trapezoid. In addition, one example has been described in which the partition wall portion 25 is provided at the inside end in the vehicle width direction of the reinforcing structure portion 20, but it is also possible to omit the partition wall portion 25.

### [Reference Signs List]

- 1: Roof panel
- 2: Side body outer panel
- 3: Roof rail groove
- 4: Roof cross member
- 5: Roof side rail
- 6: Backdoor opening portion
- 7: Roof back inner reinforcement
- 8: Backdoor hinge reinforcement
- 9: Backdoor hinge stiffener
- 10: Side body outer extension panel (upside rear portion of side body outer panel)
- 11: Quarter inner upper panel
- 12: Quarter inner upper extension panel (upper portion of quarter inner panel)
- 13: Backdoor striker
- 14: Backdoor hinge
- 15: Hinge mounting portion
- 20: Reinforcing structure portion
- 21: Upper surface portion
- 22: Rear wall portion
- 23: Bottom surface portion
- 24: Front wall portion
- 25: Partition wall portion
- L: Extension line

## Claims

1. A vehicle body rear structure comprising: a roof rail groove extending along a front-rear direction of a vehicle is provided at a join portion between a roof panel and a side body outer panel; and an upside corner portion of a backdoor opening portion that is opened and closed by a backdoor is arranged adjacent to a rear end portion of the roof rail groove, the upside corner portion of the backdoor opening portion having a cylindrical reinforcing structure portion extending in a vehicle width direction, the reinforcing structure portion being formed by an upside rear portion of the side body outer panel, and by an upper portion of a quarter inner panel that is arranged in a vehicle inside of a rear portion of the side body outer panel, the vehicle body rear structure **characterized in that**
the reinforcing structure portion has a quadrangular shape when viewed from a side of the vehicle, and includes an upper surface portion and a rear wall portion that are formed by the upside rear portion of the side body outer panel, and a bottom surface portion and a front wall portion that are formed by the upper portion of the quarter inner panel; and each of the rear wall portion and the front wall portion extends linearly from an upside portion to a downside portion.

2. The vehicle body rear structure according to claim 1,
wherein the reinforcing structure portion has a partition wall portion that extends from an inside end in the vehicle width direction of the upper surface portion and the rear wall portion to a downside of the vehicle and a front side of the vehicle, and is connected to the bottom surface portion and the front wall portion, and
wherein the partition wall portion has an inclined shape which inclines inward in the vehicle width direction toward a downside of the vehicle, and on an extension line of the inclined shape, a backdoor striker is provided in a downside portion of the backdoor opening portion, when viewed from a rear of the vehicle.

3. The vehicle body rear structure according to claim 2, further comprising a backdoor hinge reinforcement that is provided in an upside portion of the backdoor opening portion, and a backdoor hinge stiffener that connects an upside rear portion of the side body outer panel and the backdoor hinge reinforcement with a curved surface,
wherein the partition wall portion is covered with the backdoor hinge stiffener when viewed from the rear of the vehicle.

4. The vehicle body rear structure according to claim 3,
wherein the backdoor hinge stiffener has a hinge mounting portion for attaching a backdoor hinge thereto that supports the backdoor so as to be openable and closable, a rear end portion of the roof panel and the backdoor hinge reinforcement overlapped and joined at the hinge mounting portion; and
wherein the backdoor hinge is arranged more on an inner side in the vehicle width direction than the partition wall portion, when viewed from the rear of the vehicle.
